# EUROPÄISCHE PATENTSCHRIFT

(11) **EP 1 538 350 B1**
(45) Veröffentlichungstag und Bekanntmachung des Hinweises auf die Patenterteilung: **28.02.2007**
(21) Anmeldenummer: 04028388.9
(22) Anmeldetag: 01.12.2004
(51) Int. Cl.: F16B 37/08, F16B 39/02

(54) **Befestigungselement zur Anbringung auf einem Gewindebolzen**
Fastening device for mounting on a screw bolt
Dispositif d'attache pour monter sur un boulon de vis

(30) Priorität: 03.12.2003 DE 10357024
(43) Veröffentlichungstag der Anmeldung: 08.06.2005
(73) Patentinhaber: Newfrey LLC, Newark, Delaware 19711 (US)
(72) Erfinder: Reindl, Johann, 35444 Biebertal (DE)
(74) Vertreter: Haar, Lucas Heinz Jörn

(56) Entgegenhaltungen:
- DE-A1- 3 503 293
- DE-A1- 10 133 063

## Beschreibung

Die Erfindung betrifft ein Befestigungselement zur Anbringung auf einem Gewindebolzen mit einem hülsenartigen Klemmelement, das einen sich in Richtung seiner Längsachse erstreckenden Hohlraum zur Aufnahme des Gewindebolzens und wenigstens einen in den Hohlraum hinein verformbaren Klemmbereich aufweist, der auf der Außenseite des Klemmelementes wenigstens eine zur Längsachse geneigte Klemmrampe bildet, und mit einer Spannhülse, die auf das Klemmelement aufschiebbar ist und im montierten Zustand das Klemmelement umgreift, wobei eine Innenfläche der Spannhülse mit der Klemmrampe derart zusammenwirkt, daß der Klemmbereich in eine in den Hohlraum verformte, den Gewindekörper festhaltende Klemmstellung gelangt, wobei das Klemmelement an seinem in Montagerichtung vorderen Ende einen Flansch aufweist.

Befestigungselemente der angegebenen Art werden insbesondere im Automobilbau zur Befestigung von Teilen auf Gewindebolzen verwendet. Die Besonderheit dieser Befestigungselemente besteht darin, daß sie ohne Drehung allein durch eine axiale Bewegung in die Befestigungsstellung auf einen Gewindebolzen gebracht und durch Aufschieben der Spannhülse, beispielsweise mit einem Schlag, fest mit dem Gewindebolzen verbunden werden können. Die Verbindung kann wieder gelöst werden, indem das Befestigungselement wie eine Mutter von dem Gewindebolzen abgeschraubt wird. Durch Drehen des Befestigungselementes in Anzugsrichtung besteht außerdem die Möglichkeit, die axiale Klemmkraft einer hergestellten Verbindung zu erhöhen.

Bei einem aus DE 101 33 063 A1 bekannten Befestigungselement der im Oberbegriff des Patentanpruchs 1 angegebenen Art ist der Querschnitt des Klemmelementes polygonal und seine Wand hat radial nachgebende Wandabschnitte, die radial nach außen verformt werden, wenn das Klemmelement auf den Gewindebolzen aufgeschoben wird. Die Spannhülse ist abbrechbar an einem Ende des Klemmelementes angeformt und ihr innerer Querschnitt ist so bemessen, daß er über die Außenseite des Klemmelementes geschoben werden kann, wobei die radial nachgebenden Wandabschnitte nach innen verformt werden, so daß das Gewinde des Gewindebolzens teilweise in die nachgebenden Wandabschnitte eingeformt werden kann. Zum Festhalten der Spannhülse in der Montagestellung sind an dem Flansch des Klemmelementes Rastabschnitte angeformt, die sich in Richtung der Spannhülse erstrecken und eine Rastausnehmung auf der Außenseite der Spannhülse übergreifen. Zum Drehen des Befestigungselementes ist die Spannhülse mit einem Außensechskant zum Ansetzen eines Schraubenschlüssels versehen. Eine an der Spannhülse erzeugte Drehkraft wird von der polygonalen Innenfläche der Spannhülse auf die polygonalen Wandabschnitte des Klemmelementes übertragen. Dies führt infolge der Nachgiebigkeit der Wandabschnitte zu einer Erhöhung der radialen Klemmkraft und erschwert dadurch das Drehen des Befestigungselementes.

Es ist weiterhin aus DE 35 03 293 A1 ein Kunststoftbefestigungsteil zum Befestigen an einem Gewindestift bekannt, welches eine nachgiebig dehnbare Innenhülse umfasst, die auf den Gewindestift aufdrückbar ist. An ihrer Innenfläche hat die Innenhülse Zähne zum Eingreifen in das Gewinde des Stifts. Die Innenhülse ist mittels einer brechbaren Verbindung mit einer Außenhülse verbunden, welche die Innenhülse umgeben kann, wenn sie auf einem Gewindestift angeordnet ist und welche verhindert, daß sich die Innenhülse ausdehnen kann, um die Befestigung mit dem Gewindestift zu lösen. Eine Klemmung der Innenhülse durch die Außenhülse ist hierbei nicht vorgesehen.

Der Erfindung liegt die Aufgabe zugrunde, ein Befestigungselement der eingangs genannten Art zu schaffen, welches sich durch eine gute Handhabbarkeit auszeichnet. Ferner sollen neben hohen Abzugskräften bei der Montage der Spannhülse keine hohen Klemmkräfte erzeugt werden müssen, so daß der beim Bewegen der Spannhülse zu überwindende Widerstand entsprechend klein bleiben kann.

Die Aufgabe wird erfindungsgemäß durch in Patentanspruch I angegebenen Merkmale gelöst.

Bei dem erfindungsgemäßen Befestigungselement sind die Wandabschnitte der Klemmbereiche an ihrem dem Ring entgegengesetzten Ende durch Aussparungen, die sich quer zur Längsachse des Befestigungselementes erstrecken, von dem Flansch getrennt und die Klemmbereiche sind in einem Winkel zur Längsachse schräg derart nach außen gestellt, daß ihre dem Flansch benachbarten Enden einen größeren Abstand voneinander haben, wobei die Klemmbereiche des Klemmelementes auf der mit dem Gewindebolzen zusammenwirkenden Innenseite wenigstens eine Rippe aufweisen, die dazu ausgebildet ist, in eine Gewinderille des Gewindebolzens einzugreifen. Durch eine oder mehrere Rippen, die vorzugsweise an die Form des Bolzengewindes angepaßt sind, läßt sich ein wirksamer Formschluß zwischen dem Klemmelement und dem Gewindebolzen erzielen, ohne daß es großer Anpreßkräfte zwischen dem Klemmbereich des Klemmelementes und dem Gewindebolzen bedarf.

Weiterhin kann vorgesehen sein, daß die Spannhülse im montierten Zustand durch die Kupplungselemente drehfest mit dem Klemmelement verbunden ist, so daß von der Spannhülse auf das Klemmelement verhältnismäßig hohe Drehmomente übertragen werden können, ohne daß dadurch die Drehbarkeit des Befestigungselementes relativ zum Gewindebolzen nennenswert beeinflußt wird. Dies hat den Vorteil, daß das Losschrauben des Befestigungselementes erleichtert wird und daß vergleichsweise hohe Anzugsmomente und dementsprechend hohe Losdrehmomente mit dem erfindungsgemäßen Befestigungselement erzeugt bzw. übertragen werden können

Eine bevorzugte Ausgestaltung der Erfindung sieht vor, daß die Kupplungselemente durch axiale Vorsprünge an der Stirnfläche der Spannhülse und die Gegenkupplungselemente durch die Vorsprünge aufnehmende Ausnehmungen in dem Flansch des Klemmelementes gebildet sind. Die Herstellung des Befestigungselementes als Kunststoffspritzgußteil wird hierdurch vereinfacht und es läßt sich eine ausreichende Größe der Kupplungselemente ohne Schwierigkeit verwirklichen. Die Erfindung ist aber nicht auf eine solche Gestaltung beschränkt. Vielmehr können auch an dem Klemmelement oder seinem Flansch Vorsprünge angebracht sein, die mit Ausnehmungen in der Spannhülse zusammenwirken.

Nach einem weiteren Vorschlag der Erfindung kann vorgesehen sein, daß der anfängliche Innendurchmesser des Hohlraumes des Klemmelementes gleich oder größer ist als der Außendurchmesser des Gewindebolzens, so daß das Klemmelement durch axiales Gleiten und ohne großen Widerstand auf dem Gewindebolzen in Stellung gebracht werden kann. Durch diese Weiterbildung ist es möglich, die Montagekräfte zum Aufstecken des Befestigungselementes auf einen Gewindebolzen besonders klein zu halten, dies trägt ebenfalls zur Verbesserung der Handhabung des Befestigungselementes bei.

Nach einem weiteren Vorschlag der Erfindung kann vorgesehen sein, daß der Flansch des Klemmelementes auf seiner vom Klemmbereich abgekehrten Vorderseite eine mit einer Verzahnung versehene Anlagefläche hat. Durch diese Verzahnung wird insbesondere bei einer Gegenanlagefläche aus mehr oder weniger nachgiebigem Material eine Erhöhung der Reibkraft zwischen dem Flansch und der mit dem Flansch zusammenwirkenden Gegenanlagefläche erzielt, die dazu dient, das Losdrehmoment, d.h. das zum Losdrehen eines montierten Befestigungselementes erforderliche Drehmoment zu erhöhen. Durch die Erhöhung des Losdrehmomentes wird das montierte Befestigungselement besser gegen selbsttätiges Lösen gesichert. Nachteile hinsichtlich der Handhabung sind hierdurch jedoch nicht zu befürchten, da die erfindungsgemäße Gestaltung des Befestigungselementes die Übertragung hoher Drehmomente ohne Zunahme der Klemmkräfte ermöglicht.

Zur Sicherung der Spannhülse in der monierten Position auf dem Klemmelement kann nach einem weiteren Vorschlag der Erfindung an der Spannhülse wenigstens ein sich nach vorn in Richtung des Flansches erstreckender, flexibler Verriegelungsfinger vorgesehen sein, der an seinem Ende einen mit einer Schulter des Klemmelementes zusammenwirkenden Sperrhaken trägt. Vorzugsweise ist hierbei die Schulter durch einen Hinterschnitt einer Öffnung gebildet, die in dem Flansch des Klemmelementes vorgesehen ist und in die der Verriegelungsfinger im montierten Zustand der Spann hülse eingreift. Durch diese Ausgestaltung ist die Verriegelungsstelle des Verriegelungsfingers gegen Zugang von außen geschützt, so daß sich die Spannhülse bei montiertem Befestigungselement nicht mehr von dem Klemmelement trennen läßt. Erst nach Abschrauben des Befestigungselementes wird der Sperrhaken des Verriegelungsfingers auf der Vorderseite des Flansches zugänglich und kann bei Bedarf mit Hilfe eines Werkzeuges entriegelt werden.

Nach einem weiteren Vorschlag der Erfindung kann die Spannhülse durch eine Sollbruchstelle einstückig mit dem Klemmelement verbunden sein. Die Herstellung von Spannhülse und Klemmelement kann daher, beispielsweise aus Kunststoff, in einer einzigen Form erfolgen und es ist immer gewährleistet, daß beide Teile bei der Montage verfügbar sind. Vorzugsweise ist die Sollbruchstelle zwischen dem in Montagerichtung hinteren Ende des Klemmelementes und dem vorderen Ende der Spannhülse vorgesehen. Bei der Montage wird nach dem Aufstecken des Klemmelementes auf den Gewindebolzen durch einen in Richtung der Bolzenachse geführten Schlag die Spannhülse von dem Klemmelement getrennt und gleichzeitig in die Montageposition bewegt. Dieser Vorgang ermöglicht eine kurze Montagezeit und der kann sowohl von Hand als auch mit Hilfe automatischer Montageeinrichtungen ausgeführt werden.

Die Erfindung wird nachfolgend anhand eines Ausführungsbeispiels näher beschrieben, das in der Zeichnung dargestellt ist. Es zeigen
- Figur 1: eine Seitenansicht eines erfindungsgemäßen Befestigungselements,
- Figur 2: einen Längsschnitt durch das erfindungsgemäße Befestigungselement entlang der Linie II - II in Figur 3,
- Figur 3: einen Längsschnitt durch das erfindungsgemäße Befestigungselement entlang der Linie III - III in Figur 1,
- Figur 4: einen Längsschnitt des Befestigungselementes in montiertem Zustand.

Das in der Zeichnung dargestellte Befestigungselement 1 ist einstückig aus Kunststoff hergestellt und umfaßt ein Klemmelement 2 und eine Spannhülse 3. Das Klemmelement 2 weist einen hülsenförmigen Abschnitt 4 und einen an einem Ende des Abschnitts 4 angeordneten tellerförmigen Flansch 5 auf Der Flansch 5 ist auf seiner dem Abschnitt 4 abgekehrten Seite an seinem äußeren Rand mit einer sägezahnartigen Verzahnung 6 versehen. Die Zähne der Verzahnung 6 sind so ausgerichtet, daß sie bei Kontakt mit einer Gegenfläche den Drehwiderstand in der Drehrichtung erhöhen, in der das auf einem Gewindebolzen angeordnete Befestigungselement losgedreht werden kann.

Das Klemmelement 2 weist einen Hohlraum 7 zur Aufnahme eines Gewindebolzens auf Der Hohlraum 7 wird im wesentlichen durch eine zylindrische Bohrung gebildet, die den Abschnitt 4 und den Flansch 5 durchdringt, wobei die Mittelachse der Bohrung mit der Längsachse des Klemmelementes 2 zusammenfällt. Der Abschnitt 4 des Klemmelementes 2 bildet an seinem dem Flansch 5 entgegengesetzten Ende einen geschlossenen Ring 8. Zwischen dem Ring 8 und dem Flansch 5 ist die Wand des Abschnittes 4 durch Längsschlitze 9 in zwei einander gegenüberliegende Klemmbereiche 10 und zwei einander gegenüberliegende Verbindungsbereiche 11 unterteilt. Die Verbindungsbereiche 11 weisen in ihrer Mitte jeweils einen Längsschlitz 12 auf. Durch die Längsschlitze 12 wird der Biegewiderstand der Verbindungsbereiche 11 verringert und ein Verformen quer zu ihrer Längserstreckung erleichtert. Auf ihrer Außenseite sind die Verbindungsbereiche 11 mit einer flachen, konvexen Wölbung versehen, deren Scheitel in der Mitte zwischen den Enden der Verbindungsbereiche 11 liegt.

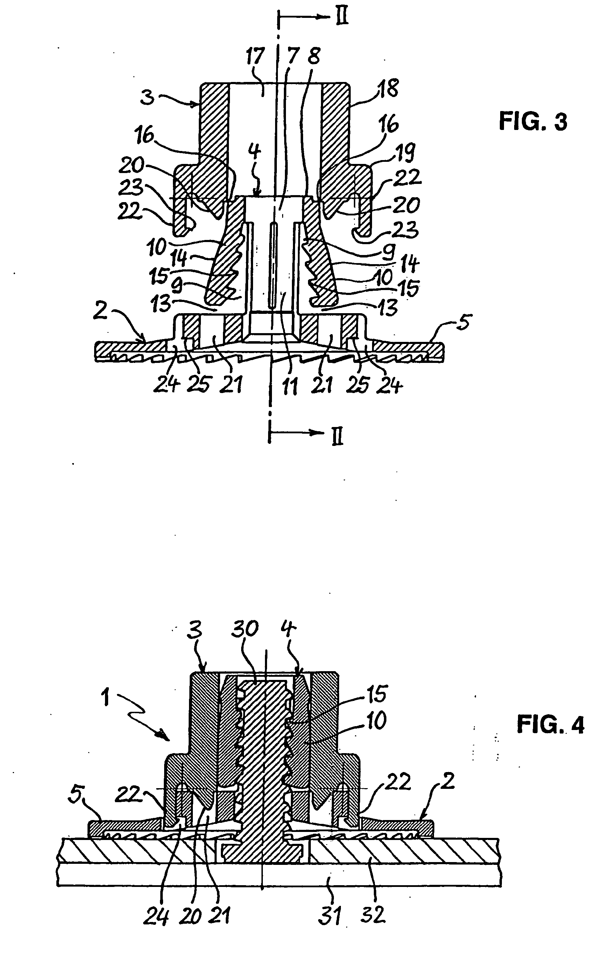

Die Wandabschnitte der Klemmbereiche 10 sind an ihrem dem Ring 8 entgegengesetzten Ende durch Aussparungen 13, die sich quer zur Längsachse des Befestigungselementes 1 erstrecken, von dem Flansch 5 getrennt. Hierdurch können die Klemmbereich 10 durch von außen auf sie einwirkende Kräfte vergleichsweise geringer Größe unter elastischer Verformung nach innen in den Hohlraum 7 hineingedrückt werden. In ihrer anfänglichen, in Figur 3 gezeigten Lage sind die Klemmbereiche 10 in einem Winkel von etwa 10° zur Längsachse schräg derart nach außen gestellt, daß ihre dem Flansch 5 benachbarten Enden einen größeren Abstand voneinander haben. Hierdurch bilden die Außenseiten der Klemmbereiche 10 zur Längsachse geneigte Klemmrampen 14, die bei der Montage des Befestigungselementes 1 mit den zugeordneten Innenflächen der Spannhülse 3 zusammenwirken. Auf ihrer Innenseite tragen die Klemmbereiche 10 sägezahnförmige Rippen 15, deren Form und Größe an das Gewinde eines mit dem Befestigungselement 1 zusammenwirkenden Befestigungsbolzens angepaßt sind. Zur Anpassung an die Gewindesteigung sind die Rippen 15 der gegenüberliegenden Klemmbereiche 10 zudem in Längsrichtung zueinander versetzt.

Der Ring 8 hat eine Außenkontur in Form eines sechskantigen Prismas. An seinem dem Flansch 5 abgekehrten Ende ist der Ring 8 durch Sollbruchstellen 16 in Form dünnwandiger Stege mit der sich an ihn anschließenden Spannhülse 3 verbunden. Die Spannhülse 3 hat eine zentrale Öffnung 17, die ebenfalls die Form eines sechskantigen Prismas hat und deren Größe an die Größe des Rings 8 derart angepaßt ist, daß der Ring 8 ohne nennenswerten Widerstand in die Öffnung 17 eindringen und unter Beibehaltung seiner Ausrichtung längs der Öffnung 17 bewegt werden kann. Auf ihrer Außenseite weist die Spannhülse 3 einen als Sechskantprisma ausgebildeten Abschnitt 18 auf, der zum Ansetzen eines Schraubenschlüssels dient. An den Abschnitt 18 schließt sich ein Ringbund 19 an.

An der dem Klemmelement 2 zugekehrten Stirnseite der Spannhülse 3 sind zwei einander gegenüberliegende Vorsprünge 20 angeformt, die im wesentlichen die Form sich tangential erstreckender Dachkantprismen haben. Die Vorsprünge 20 bilden Kupplungselemente, die mit Gegenkupplungselementen an dem Flansch 5 zusammenwirken. Zur Bildung der Gegenkupplungselemente weist der Flansch 5 in spiegelbildlicher Anordnung zwei Öffnungen 21 auf, in welche die Vorsprünge 20 eindringen, wenn die Spannhülse 3 in die in Fig. 3 gezeigte Montagestellung gebracht wird. Durch das Ineinandergreifen der Kupplungselemente und Gegenkupplungselemente wird eine drehfeste Verbindung zwischen der Spannhülse 3 und dem Klemmelement 2 geschaffen und die Übertragung vergleichsweise hoher Drehmomente von der Spannhülse 3 auf das Klemmelement 2 ermöglicht.

An dem Ringbund 19 der Spannhülse 3 sind jeweils radial außerhalb der Vorsprünge 20 Verriegelungsfinger 22 vorgesehen, die sich parallel zur Längsachse in Richtung des Flansches 5 erstrecken. An den Enden der Verriegelungsfinger 22 befindet sich auf der Innenseite jeweils ein Sperrhaken 23. Den Verriegelungsfingern 22 sind Öffnungen 24 im Flansch 5 zugeordnet. Die Öffnungen 24 sind mit einem Hinterschnitt versehen, durch den eine Schulter 25 gebildet wird. Wird die Spannhülse 3 in ihre Montageposition auf das Klemmelement gebracht, so dringen die Enden der Verriegelungsfinger 22 in die Öffnungen 24 ein und die Sperrhaken 23 gelangen in eine Stellung, in der sie die Schultern 25 hintergreifen. Hierdurch wird die Spannhülse 3 in der Montagestellung auf dem Klemmelement 2 festgehalten.

In Figur 4 ist das Befestigungselement 1 in seiner Montageposition auf einem Gewindebolzen 30 gezeigt. Der Gewindebolzen 30 ist an einem Bauteil 31 befestigt und erstreckt sich durch eine Bohrung in einem zweiten, auf dem Bauteil 31 aufliegenden Bauteil 32 in das Befestigungselement 1 hinein. Das Befestigungselement 1 liegt mit der Verzahnung 6 des Flansches 5 unmittelbar auf dem Bauteil 32 auf und drückt dieses an das Bauteil 31 an. Das Befestigungselement 1 ist hierbei an dem Gewindebolzen 30 mit Hilfe der Klemmbereiche 10 abgestützt, die mit ihren Rippen 15 in die Gewinderillen des Bolzengewindes eingreifen und in dieser Lage durch die auf den Klemmbereich 10 aufgeschobene Spannhülse 3 fixiert sind.

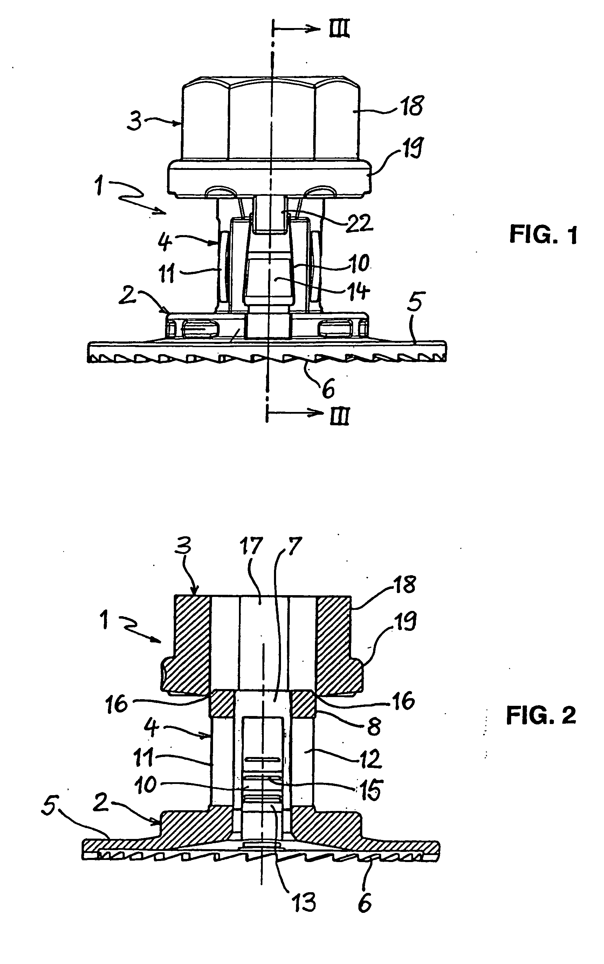

Die in Figur 4 gezeigte Montageposition des Befestigungselementes 1 wird auf folgende Weise erreicht: Zunächst wird das Befestigungselement 1 in dem anfänglichen in den Figuren 1 bis 3 gezeigten Zustand auf den Gewindebolzen 30 aufgeschoben, was ohne nennenswerten Widerstand möglich ist, da der Hohlraum 7 so groß bemessen ist, daß weder der Klemmbereich 10 noch der Verbindungsbereich 11 beim Aufstecken auf den Gewindebolzen 30 radial nach außen verformt werden müssen. Soll eine Montage an einer Unterseite eines Bauteiles erfolgen, so kann es allerdings zweckmäßig sein, den Abstand zwischen wenigstens zwei gegenüber liegenden Rippen 15 der Klemmbereiche 10 schon anfänglich etwas kleiner als den Außendurchmesser des Gewindebolzens zu bemessen, so daß das Befestigungselement 1 nach dem Auf stecken auf dem Gewindebolzen 30 festgehalten wird. Sobald das Befestigungselement 1 mit seinem Flansch 5 am Bauteil 32 anliegt, können die Sollbruchstellen 16 durch eine auf die Spannhülse einwirkende und gegen das Bauteil 32 gerichtete axiale Kraft, beispielsweise erzeugt durch einen Schlag mit einem Hammer, zerbrochen werden und kann die Spannhülse 3 bis zur Auflage auf dem Flansch 5 bewegt werden. Bei diesem Vorgang dringt das Klemmelement 2 in die Öffnung 17 der Spannhülse 3 ein und die mit den Klemmrampen 14 zusammenwirkenden Innenflächen der Öffnung 17 drücken die Klemmbereiche 10 in den Hohlraum 7 hinein und fest an den Gewindebolzen 30 an, wobei die Rippen 15 in die Rillen des Bolzengewindes eingreifen. Zudem kann vorgesehen sein, daß die Verbindungsbereiche 11 ebenfalls durch die Innenflächen der Öffnung 17 in ihrem mittleren Bereich radial nach innen gebogen werden, so daß sie spielfrei und mit Vorspannung an den Gewindegängen des Bolzengewindes anliegen. Außerdem gelangen die Vorsprünge 20 in Eingriff mit den Öffnungen 21 und die Verriegelungsfinger 22 dringen in die Öffnungen 24 ein, wobei die Sperrhaken 23 in den Hinterschnitt hinter den Schultern 25 einschnappen.

Soll die Befestigung des Bauteiles 32 gelöst werden, so ist dies nur durch Abschrauben des Befestigungselementes 1 von dem Gewindebolzen 30 möglich. Hierzu wird an der Spannhülse 3 ein Schraubenschlüssel angesetzt und nach Überwindung des durch den Kontakt der Verzahnung 6 mit dem Bauteil 32 sowie die Gewindereibung erzeugten Losdrehmoments in Löserichtung gedreht. Die Übertragung des Losdrehmomentes von der Spannhülse 3 auf das Klemmelement 2 erfolgt hierbei über die in die Öffnungen 21 eingreifenden Vorsprünge 20.

## Patentansprüche

1. Befestigungselement (1) zur Anbringung auf einem Gewindebolzen (30) mit einem hülsenartigen Klemmelement (2), das einen sich in Richtung seiner Längsachse erstreckenden Hohlraum (7) zur Aufnahme des Gewindebolzens (30) und in den Hohlraum (7) hinein verformbare Klemmbereiche (10) aufweist, die auf der Außenseite des Klemmelementes (2) wenigstens eine zur Längsachse geneigte Klemmrampe bilden, und mit einer Spannhülse (3), die auf das Klemmelement(2) aufschiebbar ist und im montierten Zustand das Klemmelement (2) umgreift, wobei eine Innenfläche der Spannhülse(3) mit der Klemmrampe derart zusammenwirkt, daß der Klemmbereich(10) in eine in den Hohlraum (7) verformte, den Gewindekörper festhaltende Klemmstellung gelangt, wobei das Klemmelement (2) an seinem in Montagerichtung vorderen Ende einen Flansch (5) aufweist, und wobei an dem Flansch (5) einerseits und an dem dem Flansch (5) zugekehrte Ende der Spannhülse (3) andererseits Kupplungselemente und Gegenkupplungselemente angeordnet sind, die ineinandergreifen und eine Drehung der Spannhülse (3) relativ zum Klemmelement (2) verhindern, wenn sich die Spannhülse (3) im montierten Zustand auf dem Klemmelement (2) befindet, **dadurch gekennzeichnet, daß** die Wandabschnitte der Klemmbereiche (10) an ihrem dem Ring (8) entgegengesetzten Ende durch Aussparungen (13), die sich quer zur Längsachse des Befestigungselementes (1) erstrecken, von dem Flansch (5) getrennt sind und die Klemmbereich (10) in einem Winkel zur Längsachse schräg derart nach außen gestellt sind, daß ihre dem Flansch (5) benachbarten Enden einen größeren Abstand voneinander haben und **daß** die Klemmbereich (10) des Klemmelementes (2) auf der mit dem Gewindebolzen (30) zusammenwirkenden Innenseite wenigstens eine Rippe (15) aufweisen, die dazu ausgebildet ist, in eine Gewinderille des Gewindebolzens (30) einzugreifen.

2. Befestigungselement nach Anspruch 1, **dadurch gekennzeichnet, daß** die Kupplungselemente durch axiale Vorsprünge (20) an der Stirnfläche der Spannhülse (3) und die Gegenkupplungselemente durch die Vorsprünge (20) aufnehmende Ausnehmungen (21) im Flansch (5) des Klemmelementes (2) gebildet sind.

3. Befestigungselement nach einem der vorhergehenden Ansprüche, **dadurch gekennzeichnet, daß** der anfängliche Innendurchmesser des Hohlraumes (7) gleich oder größer ist als der Außendurchmesser des Gewindebolzens (30).

4. Befestigungselement nach einem der vorhergehenden Ansprüche, **dadurch gekennzeichnet, daß** der Flansch (5) auf seiner vom Klemmelement (2) abgekehrten Seite eine mit einer Verzahnung (6) versehene Anlagefläche hat.

5. Befestigungselement nach einem der vorhergehenden Ansprüche, **dadurch gekennzeichnet, daß** an der Spannhülse (3) wenigstens ein sich in Richtung des Flansches (5) erstreckender, flexibler Verriegelungsfinger (22) vorgesehen, der an seinem Ende einen eine Schulter (25) des Klemmelementes (2) hintergreifenden Sperrhaken (23) trägt.

6. Befestigungselement nach Anspruch 5, **dadurch gekennzeichnet, daß** der Flansch (5) des Klemmelementes (2) eine mit dem Sperrhaken (23) zusammenwirkende Öffnung (24) mit einer durch einen Hinterschnitt gebildeten Schulter (25) aufweist.

7. Befestigungselement nach einem der vorhergehenden Ansprüche, **dadurch gekennzeichnet, daß** die Spannhülse (2) in einer für die Montage geeigneten Ausgangsstellung durch eine Sollbruchstelle (16) einstückig mit dem Klemmelement (2) verbunden ist.

8. Befestigungselement nach Anspruch 7, **dadurch gekennzeichnet, daß** die Sollbruchstelle (16) zwischen dem in Montagerichtung hinteren Ende des Klemmelementes (2) und dem vorderen Ende der Spannhülse (3) vorgesehen ist.

9. Befestigungselement nach einem der vorhergehenden Ansprüche, **dadurch gekennzeichnet, daß** das Klemmelement (2) eine polygonale Außenfläche und die Spannhülse (3) eine mit dieser zusammenwirkende polygonale Innenfläche hat.

## Claims

1. Fastener (1) to be applied to a threaded stud (30) with a sleeve-like clamping element (2) that has a cavity (7) extending in the direction of its longitudinal axis to accommodate the threaded stud (30) and clamping regions (10) that can deform into the cavity (7) and that form at least one clamping ramp inclined toward the longitudinal axis on the outside of the clamping element (2), and with a clamping sleeve (3) that can be pushed onto the clamping element (2) and in the installed state grips around the clamping element (2), wherein an inner surface of the clamping sleeve (3) works together with the clamping ramp such that the clamping region reaches a clamping position that is deformed into the cavity (7) and holds the threaded body, wherein the clamping element (2) has a flange (5) at its forward end in the direction of installation, and wherein on the flange (5) on the one hand and on the end of the clamping sleeve (3) facing the flange on the other hand, there are arranged coupling elements and mating coupling elements that interlock and prevent rotation of the clamping sleeve (3) relative to the clamping element (2) when the clamping sleeve (3) is located on the clamping element (2) in the assembled state **characterised in that** the wall sections of the clamping regions (10) are separated from the flange (5) at their end opposite the ring (8) by recesses (13), which extend transverse to the longitudinal axis of the fastener (1) and that the clamping regions (10) are angled outward to the longitudinal axis such that their ends adjacent to the flange (5) are a relatively great distance from one another, and that the clamping regions (10) of the clamping element (2) have, on their inner side that works together with the threaded stud (30), at least one rib (15) that is designed to engage in a thread groove of the threaded stud (30).

2. Fastener according to claim 1, **characterised in that** the coupling elements are formed by axial projections (20) on the end face of the clamping sleeve (3) and the mating coupling elements are formed by recesses (21) in the flange (5) of the clamping element (2) that accommodate the projections (20).

3. Fastener according to one of the preceding claims, **characterised in that** the initial inside diameter of the cavity (7) is equal to or greater than the outer diameter of the threaded stud (30).

4. Fastener according to one of the preceding claims, **characterised in that** the flange (5) has, on its side facing away from the clamping element (2), a contact surface with a toothing (6).

5. Fastener according to one of the preceding claims, **characterised in that**, provided on the clamping sleeve (3) is at least one flexible latching finger (22) extending toward the flange (5) which carries at its end a catch (23) that interlocks with a shoulder (25) of the clamping element (2).

6. Fastener according to claim 5, **characterised in that** the flange (5) of the clamping element (2) has an opening (24), which works together with the catch (23), having a shoulder (25) formed by an undercut.

7. Fastener according to one of the preceding claims, **characterised in that** the clamping sleeve (2), in an initial position suitable for installation, is integrally joined to the clamping element (2) by means of a predetermined breaking point (16).

8. Fastener according to claim 7, **characterised in that** the predetermined breaking point (16) is located, in the direction of installation, between the rearward end of the clamping element (2) and the forward end of the clamping sleeve (3).

9. Fastener according to one of the preceding claims, **characterised in that** the clamping element (2) has a polygonal outer surface and the clamping sleeve (3) has a polygonal internal surface that works together therewith.

## Revendications

1. Elément d'attache (1) à monter sur un axe fileté (30), comprenant un élément de serrage (2) en forme de douille qui comprend une cavité (7) s'étendant dans le sens de son axe longitudinal, destinée à recevoir l'axe fileté (30), et des parties de serrage (10) pouvant être déviées vers l'intérieur de la cavité (7), produisant à la face extérieure de l'élément de serrage (2) au moins une rampe de serrage inclinée par rapport à l'axe longitudinal, et comprenant un manchon de compression (3) pouvant être emmanché sur l'élément de serrage (2) et qui encercle l'élément de serrage (2) à l'état monté, une surface intérieure du manchon de compression (3) coopérant avec la rampe de serrage de manière telle que les parties de serrage (10) soient amenées dans une position de serrage en étant déformées vers l'intérieur de la cavité (7) pour retenir le corps fileté, l'élément de serrage (2) comprenant, à son extrémité avant, vue dans le sens du montage, une collerette (5), des éléments d'accouplement et des éléments d'accouplement conjugués étant respectivement aménagés sur la collerette (5) et sur l'extrémité du manchon de serrage (3), qui est tournée vers la collerette (5), ces éléments s'engageant les uns dans les autres et interdisant une rotation relative entre le manchon de compression (3) et l'élément de serrage (2), lorsque le manchon de compression (3) se trouve à l'état monté sur l'élément de serrage (2),
**caractérisé en ce que** les éléments de paroi des parties de serrage (10) sont séparées de la collerette (5), au niveau de leur extrémité opposée à l'anneau (8), par des évidements (13) qui s'étendent transversalement à l'axe longitudinal de l'élément d'attache (1), et que les parties de serrage (10) sont inclinées vers l'extérieur selon un angle par rapport à l'axe longitudinal, que leurs extrémités contiguës à la collerette (5) présentent un écartement accru les unes des autres, et que les parties de serrage (10) de l'élément de serrage (2) comportent, à leur face intérieure coopérant avec l'axe fileté (30), au moins une nervure (15) qui est conçue pour s'engager dans le fond du filetage de l'axe fileté (30).

2. Elément d'attache selon la revendication 1, **caractérisé en ce que** les éléments d'accouplement sont constitués de saillies axiales (20) ménagées à la face frontale du manchon de compression (3), et que les éléments d'accouplement conjugués sont constitués d'évidements (21) récepteurs des saillies (20), ménagés dans la collerette (5) de l'élément de serrage (2).

3. Elément d'attache selon l'une des revendications précédentes, **caractérisé en ce que** le diamètre intérieur initial de la cavité (7) est égal ou supérieur au diamètre extérieur de l'axe fileté (30).

4. Elément d'attache selon l'une des revendications précédentes, **caractérisé en ce que** la collerette (5) comporte, au niveau de sa face éloignée de l'élément de serrage (2), une surface d'appui pourvue d'une denture (6).

5. Elément d'attache selon l'une des revendications précédentes, **caractérisé en ce qu'**au moins un doigt de verrouillage flexible (22) est prévu sur le manchon de serrage (3), qui s'étend en direction de la collerette, et dont l'extrémité porte un cran d'accrochage (23) qui s'enclenche derrière un épaulement (25) de l'élément de serrage (2).

6. Elément d'attache selon la revendication 5, **caractérisé en ce que** la collerette (5) de l'élément de serrage (2) comporte une ouverture (24) coopérant avec le cran d'accrochage (23), qui présente un épaulement (25) formé par une contre-dépouille.

7. Elément d'attache selon l'une des revendications précédentes, **caractérisé en ce que**, dans une position de départ adaptée aux besoins du montage, le manchon de compression (2) est relié d'un seul tenant à l'élément de serrage (2) par l'intermédiaire d'un point d'amorce de rupture (16).

8. Elément d'attache selon la revendication 7, **caractérisé en ce que** le point d'amorce de rupture (16) est prévu entre l'extrémité arrière, dans le sens du montage, de l'élément de serrage (2), et l'extrémité avant du manchon de compression (3).

9. Elément d'attache selon l'une des revendications précédentes, **caractérisé en ce que** l'élément de serrage (2) présente une surface extérieure polygonale, et que le manchon de compression (3) présente une surface intérieure polygonale qui coopère avec la première.
